# EUROPÄISCHE PATENTANMELDUNG

(11) **EP 1 137 164 A2**
(43) Veröffentlichungstag der Anmeldung: **26.09.2001**
(21) Anmeldenummer: 01103762.9
(22) Anmeldetag: 15.02.2001
(51) Int. Cl.: H02P 6/14

(54) **Elektronisch kommutierbarer Motor**

(30) Priorität: 09.03.2000 DE 10011406
(71) Anmelder: ROBERT BOSCH GMBH, 70442 Stuttgart (DE)
(72) Erfinder: Decker, Gerhard, 77855 Achern (DE)

(57) **Zusammenfassung**

Die Erfindung betrifft einen elektronisch kommutierbaren Motor, dessen Erregerwicklungen über Leistungshalbleiter-Endstufen von einer elektronischen Steuereinheit mittels pulsweitenmodulierbarer Steuersignale in einem Kommutierungszyklus nacheinander bestrombar sind und dabei im Stator ein Drehfeld für den Permanentmagnet-Rotor erzeugen, wobei zur Weiterschaltung des Kommutierungszyklus induzierte Spannungen der Erregerwicklungen verwendet sind. Die Kommutierung läßt sich dadurch optimieren, dass jeweils nach der Abschaltung einer bestromten Erregerwicklung am Phasen-Verbindungspunkt zwischen Erregerwicklung und Leistungshalbleiter-Endstufe der Nulldurchgang der induzierten Spannung überwacht ist, und dass davon abhängig vom Nulldurchgang ein Kommutierungs-Signal für die Steuereinheit zur Bestromung der im Kommutierungszyklus folgenden Erregerwicklung ableitbar ist.

## Beschreibung

### Stand der Technik

Die Erfindung betrifft einen elektronisch kommutierbaren Motor, dessen Erregerwicklungen über Leistungshalbleiter-Endstufen von einer elektronischen Steuereinheit mittels pulsweitenmodulierbarer Steuersignale in einem Kommutierungszyklus nacheinander bestrombar sind und dabei im Stator ein Drehfeld für den Permanentmagnet-Rotor erzeugen, wobei zur Weiterschaltung des Kommutierungszyklus induzierte Spannungen der Erregerwicklungen verwendet sind.

Aus der US 5,327,053 ist ein elektronisch kommutierbarer Motor bekannt, bei dem zur Positionierung in der Ruhelage gleichzeitig zwei Wicklungen voll bestromt werden. Wird dabei keine induzierte Spannung festgestellt, dann wird ein anderes Paar von Wicklungen bestromt, bis eine induzierte Spannung die erreichte Positionierung anzeigt. Danach wird der vorgesehene Kommutierungszyklus durchgeführt.

Wie die DE 30 42 819 A1 zeigt, ist auch eine Schaltungsanordnung zur Versorgung eines Synchronmotors aus einem Gleichspannungsnetz bekannt, bei der die Wicklungen in zyklischer Reihenfolge an die Gleichspannung geschaltet werden. Dabei werden die in die nicht bestromten Wicklungen induzierten Wechselspannungen gemessen und die Zuschaltung jeweils einer Wicklung während eines vorgegebenen elektrischen Winkelbereiches wenigstens annähernd symmetrisch zum Scheitelpunkt der negativen Halbwelle der in die jeweils eine Wicklung induzierten Wechselspannung vorgenommen. Der elektrische Winkelbereich ist dabei durch die Anzahl n der Phasen des Synchronmotors mit 360°/n gegeben.

Zur zyklischen Bestromung der Wicklungen von elektronisch kommutierbaren Motoren ist auch schon eine Ringzählerschaltung verwendet worden, die aus dem Vergleich jeweils zweier an gesperrten Halbleiter-Endstufen abfallenden Spannungen Zählimpulse für den Ringzähler generiert, wie die DE 36 09 826 A1 zeigt.

Diese bekannten Schaltungen bedingen nicht nur einen erheblichen Aufwand an Bauelementen, sie liefern die Signale für die Weiterschaltung der Kommutierung auch mehr oder weniger verzögert und nicht genau zu definierten Zeitpunkten, um einen optimalen Kommutierungszyklus für die Phasen des Motors zu erhalten.

Es ist Aufgabe der Erfindung, bei einem elektronisch kommutierbaren Motor der eingangs erwähnten Art den Kommutierungszyklus der Erregerwicklungen sicher und schnell erkennbar zu machen, um die Weiterschaltung von Erregerwicklung zu Erregerwicklung genau definiert vornehmen zu können.

Diese Aufgabe wird nach der Efindung dadurch gelöst, dass jeweils nach der Abschaltung einer bestromten Erregerwicklung am Phasen-Verbindungspunkt zwischen Erregerwicklung und Leistungshalbleiter-Endstufe der Nulldurchgang der induzierten Spannung überwacht ist, und dass davon abhängig vom Nulldurchgang ein Kommutierungs-Signal für die Steuereinheit zur Bestromung der im Kommutierungszyklus folgenden Erregerwicklung ableitbar ist.

Bei dieser Auslegung der Steuerung wird von der Steuereinheit die bestromte Erregerwicklung kurz vor Abschaltung der Bestromung vorbereitet, um nach der Abschaltung am Phasen-Verbindungspunkt den Nulldurchgang der induzierten Spannung überwachen zu können. Der Zeitpunkt des Nulldurchganges ist ein definierter Schaltzeitpunkt für die Steuereinheit, um die im Kommutierungszyklus folgende Erregerwicklung bestromen zu können. Da die weitere Bestromung von dem Auftreten des Nulldurchganges abhängig ist, ergibt sich dadurch auch ein sicherer Betrieb des Motors. Der Kommutierungszyklus paßt sich zudem an die Betriebsabläufe des Motors an und die Steuerung kann die Position zwischen Rotor und Stator erkennen, so dass ein Positionserkennungssensor entfallen kann.

Für die Ableitung des Kommutierungs-Signals ist nach einer Ausgestaltung vorgesehen, dass die Steuereinheit jeweils kurz vor Ablauf der Bestromung einer Erregerwicklung eine am zugeordneten Phasen-Verbindungspunkt angeschaltete steuerbare Überwachungsschaltung ansteuert, die beim anschließenden Nulldurchgang der am Phasen-Verbindungspunkt induzierten Spannung eine allen Überwachungsschaltungen gemeinsame Schaltstufe zur Abgabe des Kommutierungs-Signals ansteuert.

Die Auslegung in Einzelheiten kann nach einer Ausgestaltung so vorgenommen sein, dass die Überwachungsschaltungen aus einer Reihenschaltung aus einem Vorwiderstand und einem Auswahl-Schalttransistor bestehen und den Phasen-Verbindungspunkten abgekehrt miteinander verbunden und an einen ersten Eingang eines Komparators angeschaltet sind, dass dem zweiten Eingang des Komparators eine Vergleichsspannung zugeführt ist, und dass der Komparator ein Ausgangssignal zur Ansteuerung der gemeinsamen Schaltstufe abgibt, wenn die von der Steuereinheit ausgewählte Überwachungsschaltung eine dem Nulldurchgang der induzierten Spannung entsprechende Spannung dem Komparator zuführt.

Eine Weiterbildung sieht vor, dass die Vergleichsspannung für den Komparator über einen an der Versorgungsspannung des Motors angeschalteten, steuerbaren Spannungsteiler abgreifbar ist, wobei der Spannungsteiler einen mittels eines Schaltsignals der Steuereinheit steuerbaren Vergleichsspannungs-Schalttransistor aufweist, damit die Steuereinheit die Vergleichsspannung an- und abschalten kann.

Damit sich zwischen den Bestromungsphasen die induzierten Spannungen in Spannungsveränderungen an den Phasen-Verbindungspunkten auswirken können, sieht eine weitere Ausgestaltung vor, dass die Bestromung zwischen aufeinanderfolgenden Erregerwicklungen zu bestromenden kurzzeitig unterbrochen ist.

Die Erfindung wird anhand eines in der Zeichnung dargestellten Ausführungsbeispiels näher erläutert. Es zeigen:
- Fig. 1: ein schematisches Schaltbild eines Motors mit vier Erregerwicklungen und einer Kommutierungs-Überwachung gemäß der Erfindung,
- Fig. 2: einen Stromlaufplan für die in Fig. 1 als Kommutierungs-Überwachung gekennzeichnete Einheit und
- Fig. 3: ein Diagramm der induzierten Spannungen, der Ansteuersignale der Steuereinheit und der Kommutierungs-Signale der Kommutierungs-Überwachung.

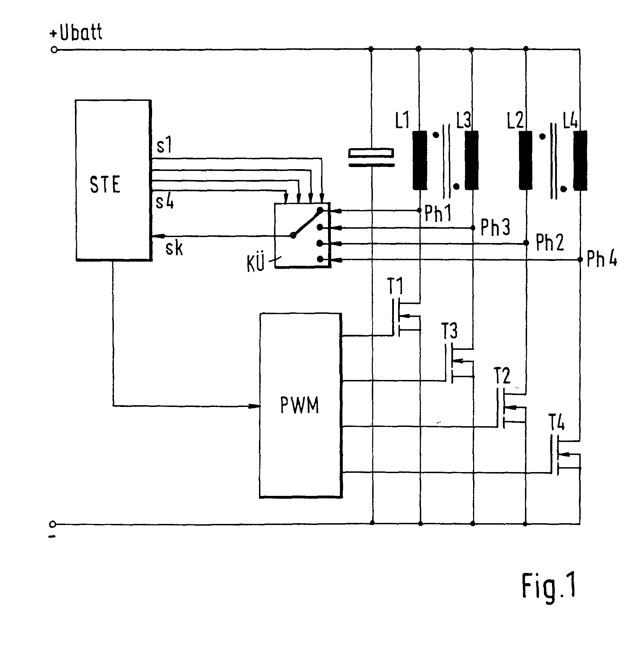

In Fig. 1 ist ein elektronisch kommutierbarer Motor mit vier Erregerwicklungen L1, L2, L3 und L4 gezeigt, die über Leistungshalbleiter-Endstufen T1, T2, T3 und T4 bestrombar sind. Dabei werden sie im Kommutierungszyklus nacheinander mit der Versorgungsspannung Ubatt verbunden und wieder abgeschaltet. Die Ansteuerung der Leistungshalbleiter-Endstufen T1 bis T4 übernimmt eine Steuereinheit STE mit einer PWM-Schaltung PWM, die auch in die Steuereinheit STE integriert sein kann. Die PWM-Steuersignale steuern die Leistungshalbleiter-Endstufen T1, T2, T3 und T4 jeweils voll durch, um die Verlustleistung an diesen möglichst klein zu halten.

Die Steuereinheit STE ist über eine Kommutierungs-Überwachung KÜ mit den Phasen-Verbindungspunkten Ph1, Ph2, Ph3 und Ph4 zwischen den Erregerwicklungen L1, L2, L3 und L4 und ihren zugeordneten Leistungshalbleiter-Endstufen T1, T2, T3 und T4 verbunden, dabei sind über die Ausgänge s1 bis s4 der Steuereinheit phasenindividuelle Anschaltesignale abgebbar und die Kommutierungs-Überwachung KÜ kann ein Kommutierungs-Signal sk an die Steuereinheit STE zurückführen.

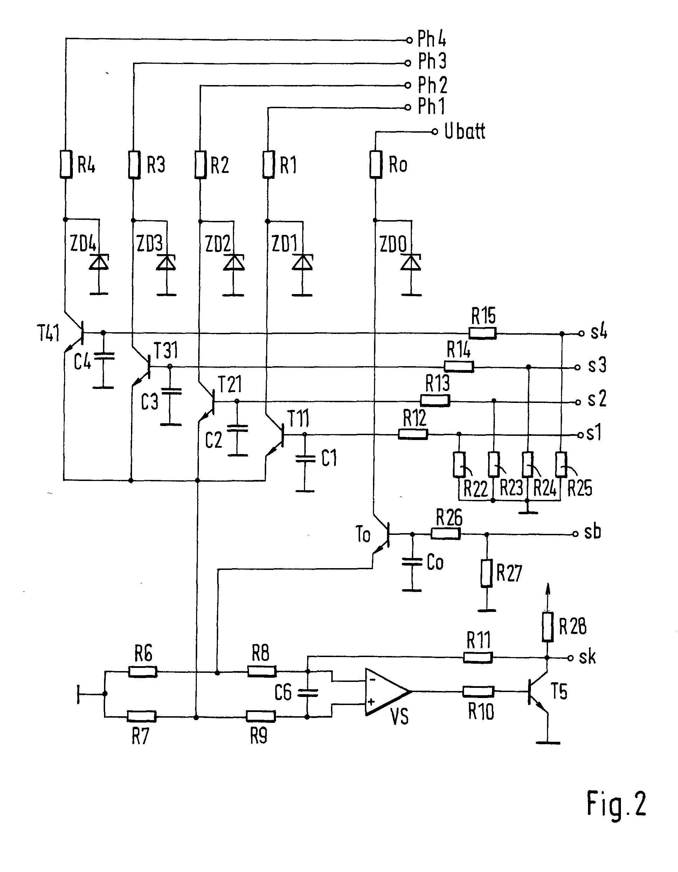

Fig. 2 zeigt ein Ausführungsbeispiel für die in Fig. 1 mit KÜ bezeichnete Kommutierungs-Überwachung. Dabei ist an jedem Phasen-Verbindungspunkt Ph1, Ph2, Ph3 und Ph4 des Motors eine eigene Überwachungsschaltung aus einem Vorwiderstand R1, R2, R3 bzw. R4 und einem Auswahl-Schalttransistor T11, T21, T31 bzw. T41 angeschaltet. Diese Reihenschaltungen sind den Phasen-Verbindungspunkten Ph1 bis Ph4 abgekehrt miteinander verbunden und auf den ersten Eingang des gemeinsamen Komparators VS geführt. Die Anschaltung erfolgt dabei über einen Spannungsteiler aus den Widerständen R7 und R9. Zenerdioden ZD1 bis ZD4 sind dabei als Schutz den Auswahl-Schalttransistoren T11 bis T41 parallel geschaltet und Kondensatoren C1, C2, C3 und C4 übernehmen die Glättung der den Auswahl-Schalttransistoren T11 bis T41 zugeführten Steuersignale s1 bis s4, die von der Steuereinheit STE abgegeben werden und durch Spannungsteiler R12, R22 bzw. R13, R23 bzw. R14, R24 bzw. R15, R25 in reduzierter Größe an die Steuereingänge der Auswahl-Schalttransistoren T11 bis T41 gelangen.

Aus der Versorgungsspannung Ubatt wird über einen Spannungsteiler aus einem Widerstand Ro und einem Vergleichsspannungs-Schalttransistor To an den zweiten Eingang des Komparators S eine Vergleichsspannung abgeleitet, wobei die Anschaltung über einen Spannungsteiler aus den Widerständen R6 und R8 erfolgt. Der Komparator VS steuert mit seinem Ausgangssignal eine gemeinsame Schaltstufe T5, die über den Widerstand R10 angesteuert und über den Widerstand R28 gespeist wird. Am Ausgang der Schaltstufe T5 wird das Kommutierungs-Signal sk abgegeben. Der Widerstand R11 verbindet den Ausgang der Schaltstufe T5 mit dem zweiten Eingang des Komparators VS, um den Schaltzustand des Komparators VS aufzuheben.

Die Vergleichsspannung für den Komparator VS ist auch über den Steuereingang sb von der Steuereinheit STE aus an- und abschaltbar. Dabei sind ein Spannungsteiler mit den Widerständen R26 und R27 sowie ein Glättungskondensator Co in den Steuerkreis eingeschaltet.

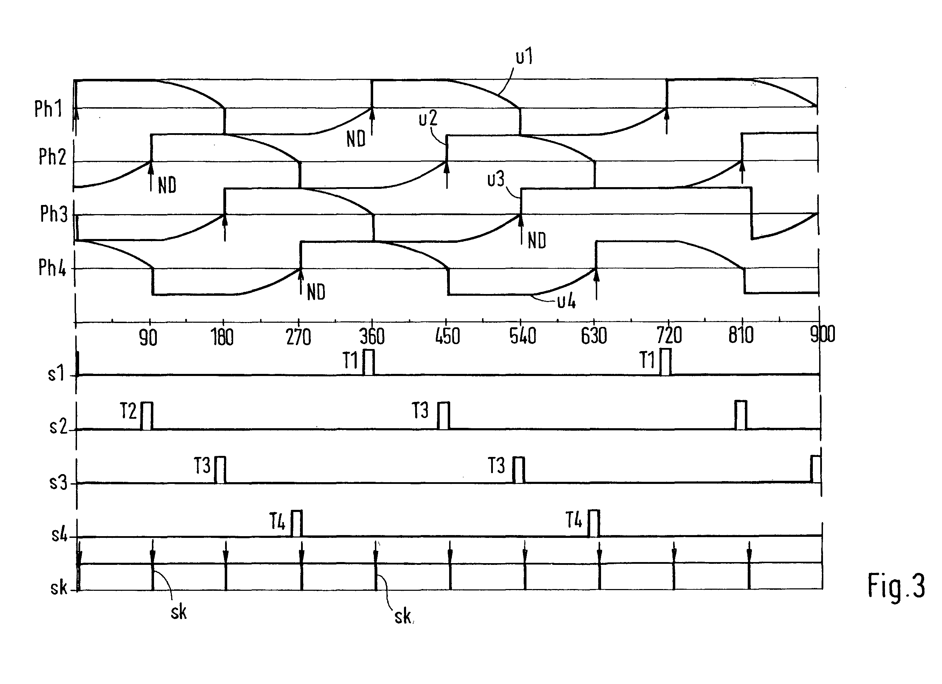

Anhand der Fig. 2 und 3 ist nun die Wirkungsweise der Kommutierungs-Überwachung zu erläutern. Wird von der Steuereinheit STE z.B. die Erregerwicklung L1 bestromt, dann wird kurz vor Abschaltung der Bestromung ein Steuersignal s1 an den Auswahl-Schalttransistor T11 übertragen, der damit in den leitenden Schaltzustand übergeht. Am Phasen-Verbindungspunkt Ph1 tritt nach der Abschaltung der Bestromung eine induzierte Spannung u1 auf. Der Spannungsverlauf ist in Fig. 3 mit u1 bezeichnet. Die Nulldurchgäng ND führen zu einem Steuerpotential am ersten Eingang des Komparators VS, das zu einem Ausgangssignal am Komparator VS und einem Kommutierungssignal sk m Ausgang der gemeinsamen Schaltstufe T5 führt. Die Steuereinheit STE nimmt dieses auf und veranlaßt die Weiterschaltung des Kommutierungszyklus durch die Bestromung der folgenden Erregerwicklung, z.B. L2. Anhand der Kommutierungs-Signale sk erkennt die Steuereinheit STE den ordnungsgemäßen Ablauf der Kommutierung und den richtigen Zeitpunkt für die Weiterschaltung der Bestromung. Außerden kann daraus ohne Positionssensor die Position des Rotors zum Stator abgeleitet werden.

Die Weiterschaltung der Überwachungsschaltungen R1,T11; R2,T21; R3,T31 und R4,T41 übernimmt die Steuereinheit STE mit den Steuersignalen s1 bis s4 in Übereinstimmung mit der Bestromung der Erregerwicklungen L1 bis L4 und zwar jeweils kurz vor Abschaltung der Bestromung. In jedem Fall übernimmt der Komparator VS auch die Überwachung auf das Auftreten des entsprechenden Nulldurchganges in den induzierten Spannungen u2, u3 und u4 unter Zuhilfenahme der Vergleichsspannung, die über das Signal sb auch bedarfsabhängig von der Steuereinheit STE an- und abgeschaltet werden kann, um den Strombedarf im Ruhezustand zu begrenzen.

## Patentansprüche

1. Elektronisch kommutierbarer Motor, dessen Erregerwicklungen über Leistungshalbleiter-Endstufen von einer elektronischen Steuereinheit mittels pulsweitenmodulierbarer Steuersignale in einem Kommutierungszyklus nacheinander bestrombar sind und dabei im Stator ein Drehfeld für den Permanentmagnet-Rotor erzeugen, wobei zur Weiterschaltung des Kommutierungszyklus induzierte Spannungen der Erregerwicklungen verwendet sind,
**dadurch gekennzeichnet**,
dass jeweils nach der Abschaltung einer bestromten Erregerwicklung (z.B. L1) am Phasen-Verbindungspunkt (Ph1, Ph2, Ph3, Ph4) zwischen Erregerwicklung (L1, L2, L3, L4) und Leistungshalbleiter-Endstufe (T1, T2, T3, T4) der Nulldurchgang (ND) der induzierten Spannung (u1, u2, u3, u4) überwacht ist, und
dass davon abhängig vom Nulldurchgang (ND) ein Kommutierungs-Signal (sk) für die Steuereinheit (STE) zur Bestromung der im Kommutierungszyklus folgenden Erregerwicklung (z.B. L2) ableitbar ist.

2. Elektronisch kommutierbarer Motor nach Anspruch 1,
**dadurch gekennzeichnet,**
**dass** die Steuereinheit (STE) jeweils kurz vor Ablauf der Bestromung einer Erregerwicklung (L1, L2, L3, L4) eine am zugeordneten Phasen-Verbindungspunkt (Ph1, Ph2, Ph3, Ph4) angeschaltete steuerbare Überwachungsschaltung (R1,T11; R2,T21; R3,T31; R4,T41) ansteuert (s1, s2, s3, s4), die beim anschließenden Nulldurchgang (ND) der am Phasen-Verbindungspunkt (Ph1, Ph2, Ph3, Ph4) induzierten Spannung (u1, u2, u3, u4) eine allen Überwachungsschaltungen (R1,T11; R2,T21; R3,T31; R4,T41) gemeinsame Schaltstufe (T5) zur Abgabe des Kommutierungs-Signals (sk) ansteuert.

3. Elektronisch kommutierbarer Motor nach Anspruch 1 oder 2,
**dadurch gekennzeichnet**,
dass die Überwachungsschaltungen (R1,T11; R2,T21; R3,T31; R4,T41) aus einer Reihenschaltung aus einem Vorwiderstand (R1, R2, R3, R4) und einem Auswahl-Schalttransistor (T11, T21, T31, T41) bestehen und den Phasen-Verbindungspunkten (Ph1, Ph2, Ph3, Ph4) abgekehrt miteinander verbunden und an einen ersten Eingang eines Komparators (VS) angeschaltet sind,
dass dem zweiten Eingang des Komparators (VS) eine Vergleichsspannung zugeführt ist, und
dass der Komparator (VS) ein Ausgangssignal zur Ansteuerung der gemeinsamen Schaltstufe (T5) abgibt, wenn die von der Steuereinheit (STE) ausgewählte Überwachungsschaltung (R1,T11; R2,T21; R3,T31; R4,T41) eine dem Nulldurchgang (ND) der induzierten Spannung (u1, u2, u3, u4) entsprechende Spannung dem Komparator (VS) zuführt.

4. Elektronisch kommutierbarer Motor nach Anspruch 3,
**dadurch gekennzeichnet,**
**dass** die Vergleichsspannung für den Komparator (VS) über einen an der Versorgungsspannung (Ubatt) des Motors angeschalteten, steuerbaren Spannungsteiler (Ro, To, R6) abgreifbar ist, wobei der Spannungsteiler einen mittels eines Schaltsignals (sb) der Steuereinheit (STE) steuerbaren Vergleichsspannungs-Schalttransistor (To) aufweist.

5. Elektronisch kommutierbarer Motor nach einem der Ansprüche 1 bis 4,
**dadurch gekennzeichnet,**
**dass** die Bestromung zwischen aufeinanderfolgenden Erregerwicklungen (L1, L2, L3, L4) zu bestromenden kurzzeitig unterbrochen ist.
